# EUROPÄISCHE PATENTANMELDUNG

(11) **EP 4 573 862 A1**
(43) Veröffentlichungstag der Anmeldung: **25.06.2025**
(21) Anmeldenummer: 24220208.3
(22) Anmeldetag: 16.12.2024
(51) Int. Cl.: A01B 49/02, A01B 63/111, A01B 63/114

(54) **LANDWIRTSCHAFTLICHES BODENBEARBEITUNGSGERÄT ZUR BEARBEITUNG EINES BODENS**

(30) Priorität: 19.12.2023 DE 102023135719
(71) Anmelder: Lemken GmbH & Co KG, 46519 Alpen (DE)
(72) Erfinder: RÖTTGERMANN, Sebastian, 47608 Geldern (DE); ALBRECHT, David, 46483 Wesel (DE)

(57) **Zusammenfassung**

Die vorliegende Erfindung betrifft ein landwirtschaftliches Bodenbearbeitungsgerät (1) zur Bearbeitung eines Bodens (7), umfassend einen Tragrahmen mit einem vorderen Rahmensegment (4), an welchem erste Bodenbearbeitungswerkzeuge (5) angeordnet sind, und ein hinteres Rahmensegment (21), welches am vorderen Rahmensegment (4) um eine in Querrichtung des Bodenbearbeitungsgerätes (1) verlaufende Schwenkachse (48) schwenkbar angelenkt ist, wobei an dem hinteren Rahmensegment (21) zweite Bodenbearbeitungswerkzeuge (11) angeordnet sind, und wobei das hintere Rahmensegment (21) durch zumindest eine Schwenkvorrichtung (49) relativ zum vorderen Rahmensegment (4) schwenkbar ist, wobei dem Bodenbearbeitungsgerät (1) eine Steuereinheit (10) zugeordnet ist, welche die zumindest eine Schwenkvorrichtung (49) ansteuert, wobei eine erste Sensoranordnung (42) den ersten Bodenbearbeitungswerkzeugen (5) vorgeordnet am vorderen Rahmensegment (4) angeordnet ist und mindestens eine zweite Sensoranordnung (43) den zweiten Bodenbearbeitungswerkzeugen (11) nachgeordnet am hinteren Rahmensegment (21) angeordnet ist, wobei die Sensoranordnungen (42, 43) dazu ausgeführt und eingerichtet sind, jeweils einen parallel zur Schwenkachse (48) verlaufenden und dem Boden (7) zugewandten Messbereich (44, 45) aufzuspannen und die von den Sensoranordnungen (42, 43) generierten Messsignale an die Steuereinheit (10) zur Bestimmung der Orientierung des vorderen und des hinteren Rahmensegmentes (4, 21) relativ zum Boden (7) zu übertragen, wobei die Steuereinheit (10) die zumindest eine Schwenkvorrichtung (49) in Abhängigkeit von der bestimmten Orientierung ansteuert, um das vordere Rahmensegment (4) und das hintere Rahmensegment (21) parallel zum Boden (7) auszurichten.

## Beschreibung

Die vorliegende Erfindung betrifft ein landwirtschaftliches Bodenbearbeitungsgerät zur Bearbeitung eines Bodens gemäß dem Oberbegriff des Anspruches 1. Weiterhin sind ein Verfahren zum Betreiben eines landwirtschaftlichen Bodenbearbeitungsgerätes gemäß dem Oberbegriff des Anspruches 12 sowie eine landwirtschaftliche Kombination nach Anspruch 15 Gegenstand der Erfindung.

Ein Bodenbearbeitungsgerät der eingangs genannten Art ist aus der DE 10 2018 209 193 A1 bekannt. Das als Kurzscheibenegge ausgeführte Bodenbearbeitungsgerät gemäß DE 10 2018 209 193 A1 umfasst einen Tragrahmen mit einem vorderen Rahmensegment, an dem erste Bodenbearbeitungswerkzeuge in zumindest einer Querreihe angeordnet sind. Die ersten Bodenbearbeitungswerkzeuge sind als Hohlscheiben ausgeführt. Weiter weist der Tragrahmen ein hinteres Rahmensegment auf, welches am vorderen Rahmensegment um eine Schwenkachse relativ zu diesem schwenkbar angelenkt ist. An dem hinteren Rahmensegment sind zweite Bodenbearbeitungswerkzeuge in zumindest einer Querreihe angeordnet. Die zweiten Bodenbearbeitungswerkzeuge sind als Nachlaufwalzen ausgeführt. Das hintere Rahmensegment ist durch zumindest einen Aktuator oder eine aktuierte Kinematik relativ zum vorderen Rahmensegment schwenkbar. Dem Bodenbearbeitungsgerät ist eine Steuereinheit zugeordnet, welche den zumindest einen Aktuator oder die aktuierte Kinematik ansteuert.

Beim Einsatz eines solchen Bodenbearbeitungsgerätes ist es in vielen Anwendungsfällen erforderlich, dass das die ersten Bodenbearbeitungswerkzeuge tragende vordere Rahmensegment und das die zweiten Bodenbearbeitungswerkzeuge tragende hintere Rahmensegment parallel zum zu bearbeitenden Boden ausgerichtet sind. Die Parallelität des vorderen Rahmensegmentes und des hinteren Rahmensegmentes wird vom Bediener des Bodenbearbeitungsgerätes vor der Aufnahme der Bearbeitung des Bodens eingestellt. Eine Abweichung von der Parallelität des vorderen Rahmensegmentes und des hinteren Rahmensegmentes gegenüber dem zu bearbeitenden Boden muss durch den Bediener erkannt werden. Wird eine Abweichung der Parallelität bei der Einstellung oder während des Betriebs nicht erkannt, beispielsweise, weil der Bediener nicht über ausreichend Erfahrung verfügt oder aufgrund witterungsbedingt eingeschränkter Sichtverhältnisse, führt dies zu einem ungewünschten Arbeitsergebnis und unterschiedlichem Verschleißen der Bodenbearbeitungswerkzeuge.

Ausgehend vom vorstehend genannten Stand der Technik liegt der Erfindung die Aufgabe zugrunde, ein landwirtschaftliches Bodenbearbeitungsgerät der eingangs genannten Art weiterzubilden, welches einen Bediener von der Überwachung Einhaltung der Parallelität des vorderen Rahmensegmentes und des hinteren Rahmensegmentes gegenüber dem zu bearbeitenden Boden entlastet.

Diese Aufgabe wird erfindungsgemäß durch ein landwirtschaftliches Bodenbearbeitungsgerät mit den Merkmalen des Anspruches 1 gelöst. Weiterhin wird die Aufgabe durch ein Verfahren zum Betreiben eines landwirtschaftlichen Bodenbearbeitungsgerätes zur Bearbeitung eines Bodens mit den Merkmalen des nebengeordneten Anspruches 12 sowie durch eine landwirtschaftliche Kombination mit den Merkmalen des nebengeordneten Anspruches 15 gelöst. Vorteilhafte Weiterbildungen sind Gegenstand der jeweiligen Unteransprüche.

Gemäß dem Anspruch 1 wird ein landwirtschaftliches Bodenbearbeitungsgerät zur Bearbeitung eines Bodens vorgeschlagen, umfassend einen Tragrahmen mit einem vorderen Rahmensegment, an welchem erste Bodenbearbeitungswerkzeuge angeordnet sind, und ein hinteres Rahmensegment, welches am vorderen Rahmensegment um eine in Querrichtung des Bodenbearbeitungsgerätes verlaufende Schwenkachse schwenkbar ist, wobei an dem hinteren Rahmensegment zweite Bodenbearbeitungswerkzeuge angeordnet sind, und wobei das hintere Rahmensegment durch eine Schwenkvorrichtung relativ zum vorderen Rahmensegment schwenkbar ist, wobei dem Bodenbearbeitungsgerät eine Steuereinheit zugeordnet ist, welche die Schwenkvorrichtung ansteuert. Erfindungsgemäß ist vorgesehen, dass eine erste Sensoranordnung den ersten Bodenbearbeitungswerkzeugen vorgeordnet am vorderen Rahmensegment angeordnet ist und zumindest eine zweite Sensoranordnung den zweiten Bodenbearbeitungswerkzeugen nachgeordnet am hinteren Rahmensegment angeordnet ist, wobei die Sensoranordnungen dazu ausgeführt und eingerichtet sind, jeweils einen parallel zur Schwenkachse verlaufenden und dem Boden zugewandten Messbereich aufzuspannen und die von der ersten Sensoranordnung und der zumindest einen zweiten generierten Messsignale an die Steuereinheit zur Bestimmung der Orientierung des vorderen und des hinteren Rahmensegmentes relativ zum Boden zu übertragen, wobei die Steuereinheit die Schwenkvorrichtung in Abhängigkeit von der bestimmten Orientierung ansteuert, um das vordere Rahmensegment und das hintere Rahmensegment parallel zum Boden auszurichten.

Wesentlich ist, dass die erste und die zumindest eine zweite Sensoranordnung dazu ausgeführt und eingerichtet sind, jeweils einen parallel zu der zumindest einer Querreihe mit Bodenbearbeitungswerkzeugen verlaufenden und dem Boden zugewandten Messbereich aufzuspannen, um durch die Auswertung der generierten Messsignale zur Auswertung die Orientierung des vorderen und des hinteren Rahmensegmentes relativ zum Boden zu bestimmen. Durch die ortsfeste Anordnung der jeweiligen Sensoranordnung am vorderen und hinteren Rahmensegment ist eine unveränderbare Position gegeben, sodass ersichtlich ist, in welche Richtung das vordere Rahmensegment und das hintere Rahmensegment gegenüber dem zu bearbeitenden Boden verschoben und/oder verdreht sind. Durch die Überwachung der Parallelität der Ausrichtung des Bodenbearbeitungsgerätes gegenüber dem Boden kann vermieden werden, dass es zu unerwünschten Bearbeitungsergebnissen und/oder unterschiedlichem Verschleiß der Bodenbearbeitungswerkzeuge kommt. Dies kann auf eine von der Parallelität des vorderen und des hinteren Rahmensegmentes gegenüber dem Boden abweichende Orientierung zurückgehen.

Die den ersten Bodenbearbeitungswerkzeugen vorgeordnet am vorderen Rahmensegment angeordnete erste Sensoranordnung spannt ihren Messbereich vor den ersten Bodenbearbeitungswerkzeugen auf. Die den zweiten Bodenbearbeitungswerkzeugen nachgeordnet am hinteren Rahmensegment angeordnete mindestens eine zweite Sensoranordnung spannt ihren Messbereich hinter den zweiten Bodenbearbeitungswerkzeugen auf.

Insbesondere können die Sensoranordnungen am vorderen und am hinteren Rahmensegment jeweils zumindest einen taktilen und/oder berührungslos arbeitenden Sensor umfassen.

Dabei können berührungslos arbeitende Sensoren als Ultraschall-Sensoren, Radar-Sensoren, Lidar-Sensoren und/oder als Kamera ausgeführt sein. Mittels der vorstehend genannten berührungslos arbeitenden Sensoren kann jeweils ein dem Boden zugewandter Messbereich aufgespannt werden. Dabei kann auch eine Kombination unterschiedlicher berührungslos arbeitender Sensoren zur Anwendung kommen.

Insbesondere können die von der ersten Sensoranordnung und der zumindest einen zweiten Sensoranordnung aufgespannten Messbereiche linienförmig, flächenförmig und/oder punktwolkenförmig ausgebildet sein.

Bevorzugt kann der Schwenkachse und/oder der Schwenkvorrichtung zumindest eine Sensoreinheit zugeordnet sein, die dazu ausgeführt und eingerichtet ist, eine durch eine Schwenkbewegung um die Schwenkachse generierte Abweichung einer parallelen Ausrichtung des hinteren Rahmensegmentes relativ zum vorderen Rahmensegment zu detektieren. Mittels der zumindest einen Sensoreinheit kann eine Lageänderung der am hinteren Rahmensegment angeordneten zumindest einen zweiten Sensoranordnung detektiert werden. Die Schwenkvorrichtung kann als zumindest ein Aktuator oder eine aktuierte Kinematik ausgeführt sein, mittels der das hintere Rahmensegment relativ zum vorderen Rahmensegment schwenkbar ist.

Die zumindest eine Sensoreinheit kann als Inertialmesseinheit, Lagesensor, Winkelsensor und/oder Wegmesssensor ausgeführt sein. Eine als Winkelsensor ausgeführte Sensoreinheit kann unmittelbar der Schwenkachse zugeordnet sein, um welche das hintere Rahmensegment gegenüber dem vorderen Rahmensegment schwenkbar angelenkt ist. Eine als Wegmesssensor ausgeführte Sensoreinheit kann einen Verstellweg der Schwenkvorrichtung detektieren.

Die Schwenkachse kann, abhängig von der Ausgestaltung der zumindest einen Schwenkvorrichtung, auch eine virtuelle Schwenkachse sein, welche keine Anbindung an die Schwenkvorrichtung bzw. das vordere und das hintere Rahmensegment aufweist.

Weiterhin kann die Steuereinheit Signale der zumindest einen Sensoreinheit auswerten und bei der Ansteuerung der Schwenkvorrichtung berücksichtigen. Die Kenntnis einer Lageänderung der am hinteren Rahmensegment angeordneten zumindest einen zweiten Sensoranordnung ist erforderlich, um dies bei der Auswertung der Messsignale durch die Steuereinheit berücksichtigen zu können.

Gemäß einer bevorzugten Weiterbildung kann die am vorderen Rahmensegment angeordnete erste Sensoranordnung derart positioniert sein, dass ein Abstand zum Boden bestimmbar ist, und die am hinteren Rahmensegment angeordnete zumindest eine zweite Sensoranordnung kann an einer Halterung angeordnet sein, welche zumindest abschnittsweise in vertikaler und horizontaler Richtung über das hintere Rahmensegment hinausragt. Während die am vorderen Rahmensegment angeordnete erste Sensoranordnung vor den ersten Bodenbearbeitungswerkzeugen am vorderen Rahmensegment angeordnet ist und den in diesem Zeitpunkt durch das Bodenbearbeitungsgerät unbearbeiteten Boden detektiert, erfasst die am hinteren Rahmensegment angeordnete zumindest eine zweite Sensoranordnung den durch die Bodenbearbeitungswerkzeuge am zweiten Rahmensegment bearbeiteten Boden. Die durch die Halterung bestehende räumliche Beabstandung der am hinteren Rahmensegment angeordneten zumindest einen zweiten Sensoranordnung sowohl in vertikaler als auch in horizontaler Richtung reduziert den Einfluss auf die Erfassung des bearbeiteten Bodens von etwaig aufgeworfenem Erdreich oder dergleichen.

Insbesondere können die ersten Bodenbearbeitungswerkzeuge am vorderen Rahmensegment dazu ausgeführt und eingerichtet sein, abschnittsweise in den Boden einzudringen und die zweiten Bodenbearbeitungswerkzeuge am hinteren Rahmensegment können zur Einebnung des Bodens eingerichtet sein.

Gemäß einer bevorzugten Weiterbildung können die ersten Bodenbearbeitungswerkzeuge am vorderen Rahmensegment von den zweiten Bodenbearbeitungswerkzeugen am hinteren Rahmensegment abweichend ausgeführt und zur Durchführung unterschiedlicher Bodenbearbeitungsaufgaben eingerichtet sein.

Beispielsweise können die ersten Bodenbearbeitungswerkzeuge als Flügelscharzinken, Striegelzinken und/oder Hohlscheiben ausgeführt sein. Dabei können die als Flügelscharzinken, Striegelzinken und/oder Hohlscheiben ausgeführten ersten Bodenbearbeitungswerkzeuge in mehreren Querreihen hintereinander angeordnet sein.

Dabei können die Querreihen einen lateralen Versatz aufweisen. Die zweiten Bodenbearbeitungswerkzeuge am hinteren Rahmensegment können beispielsweise als in zumindest einer Querreihe angeordnete Walzen ausgeführt sein. Die Art und Ausführung von Walzen variieren unter anderem in Abhängigkeit von der Bodenbeschaffenheit.

Insbesondere kann das Bodenbearbeitungsgerät als Grubber, Egge oder Striegel ausgeführt sein.

Gemäß einer bevorzugten Weiterbildung kann die Steuereinheit zur drahtlosen oder drahtgebundenen Kommunikation mit einer entfernten Datenverarbeitungsvorrichtung eingerichtet sein. Bei der entfernten Datenverarbeitungsvorrichtung kann es sich um ein Terminal auf einem landwirtschaftlichen Arbeitsfahrzeug oder einen Jobrechner, welcher zumindest einen weiteren Parameter des Bodenbearbeitungsgerätes oder des Arbeitsfahrzeuges ermittelnd oder beeinflussend ausgebildet sein kann. Alternativ oder zusätzlich kann die entfernte Datenverarbeitungsvorrichtung als ein Mobilfunktelefon oder ein Tablet ausgeführt sein.

Weiterhin wird die eingangs gestellte Aufgabe durch ein Verfahren zum Betreiben eines landwirtschaftlichen Bodenbearbeitungsgerätes zur Bearbeitung eines Bodens mit den Merkmalen des nebengeordneten Anspruchs 12 gelöst.

Gemäß Anspruch 12 wird ein Verfahren zum Betreiben eines landwirtschaftlichen Bodenbearbeitungsgerätes zur Bearbeitung eines Bodens vorgeschlagen, welches einen Tragrahmen mit einem vorderen Rahmensegment, an welchem erste Bodenbearbeitungswerkzeuge angeordnet sind, und ein hinteres Rahmensegment, welches am vorderen Rahmensegment um eine in Querrichtung des Bodenbearbeitungsgerätes verlaufende Schwenkachse schwenkbar angelenkt ist, wobei an dem hinteren Rahmensegment zweite Bodenbearbeitungswerkzeuge angeordnet sind, umfasst, wobei das hintere Rahmensegment durch zumindest eine Schwenkvorrichtung relativ zum vorderen Rahmensegment geschwenkt wird, wobei dem Bodenbearbeitungsgerät eine Steuereinheit zugeordnet ist, durch welche die zumindest eine Schwenkvorrichtung angesteuert wird. Erfindungsgemäß ist vorgesehen, dass eine erste Sensoranordnung den ersten Bodenbearbeitungswerkzeugen vorgeordnet am vorderen Rahmensegment angeordnet ist und zumindest eine zweite Sensoranordnung den zweiten Bodenbearbeitungswerkzeugen nachgeordnet am hinteren Rahmensegment angeordnet ist, wobei durch die Sensoranordnungen jeweils einen parallel zur Schwenkachse verlaufender und dem Boden zugewandten Messbereich aufgespannt wird und die von den Sensoranordnungen generierten Messsignale an die Steuereinheit zur Bestimmung der Orientierung des vorderen und des hinteren Rahmensegmentes relativ zum Boden übertragen werden, wobei die zumindest eine Schwenkvorrichtung in Abhängigkeit von der bestimmten Orientierung durch die Steuereinheit angesteuert wird, um das vordere Rahmensegment und das hintere Rahmensegment parallel zum Boden auszurichten. Auf die erfindungsgemäßen Vorteile des landwirtschaftlichen Bodenbearbeitungsgerätes darf verwiesen werden.

Bevorzugt kann die zumindest eine Schwenkvorrichtung durch die Steuereinheit in Abhängigkeit von der bestimmten Orientierung des vorderen und des hinteren Rahmensegmentes relativ zum Boden automatisch angesteuert werden. Dies hat den Vorteil, dass der Bediener des landwirtschaftlichen Bodenbearbeitungsgerätes während der Durchführung eines Bodenbearbeitungsvorgangs von der Überwachung der Einhaltung der Parallelität des vorderen und des hinteren Rahmensegmentes relativ zu dem zu bearbeitenden Boden entlastet wird. Dies ist insbesondere bei einem vollautomatischen oder autonomen Betrieb des Bodenbearbeitungsgerätes vorteilhaft.

Alternativ oder zusätzlich kann durch die Steuereinheit in Abhängigkeit von der bestimmten Orientierung des vorderen und des hinteren Rahmensegmentes relativ zum Boden eine Einstellempfehlung zur manuellen Ansteuerung der zumindest einen Schwenkvorrichtung generiert werden. Hierzu kann die Steuereinheit mittels einer drahtlosen oder drahtgebundenen Kommunikation mit einer entfernten Datenverarbeitungsvorrichtung Daten austauschen, um dem Bediener des landwirtschaftlichen Bodenbearbeitungsgerätes Einstellempfehlungen auf einer Anzeige der entfernten Datenverarbeitungsvorrichtung anzuzeigen. Insbesondere kann der Bediener diese Einstellempfehlungen bestätigen, so dass diese von der Steuereinheit durch das Generieren von Steuerbefehlen zur Ansteuerung der zumindest einen Schwenkvorrichtung umgesetzt werden. Denkbar ist auch, dass der Bediener die Einstellempfehlungen modifizieren kann.

Des Weiteren wird die Aufgabe durch eine landwirtschaftliche Kombination nach Anspruch 15 gelöst, wobei die landwirtschaftliche Kombination ein landwirtschaftliches Arbeitsfahrzeug und ein Bodenbearbeitungsgerät umfasst, wobei das Bodenbearbeitungsgerät nach einem der Ansprüche 1 bis 11 ausgeführt und zur Durchführung des Verfahrens nach einem der Ansprüche 12 bis 14 eingerichtet ist. Auf die erfindungsgemäßen Vorteile des landwirtschaftlichen Bodenbearbeitungsgerätes sowie des Verfahrens zum Betreiben des landwirtschaftlichen Bodenbearbeitungsgerätes darf verwiesen werden.

Insbesondere kann das landwirtschaftliche Arbeitsfahrzeug vollautomatisiert oder autonom betreibbar sein. Dabei kann das landwirtschaftliche Arbeitsfahrzeug als ein Traktor oder eine autonome Einheit ausgeführt sein, an den bzw. die das landwirtschaftliche Bodenbearbeitungsgerät adaptiert ist. Die Steuereinheit kann am Bodenbearbeitungsgerät oder an dem Arbeitsfahrzeug angeordnet sein. Die Steuereinheit kann zum vollautomatischen Ansteuern des landwirtschaftlichen Bodenbearbeitungsgerätes eingerichtet sein, wodurch sich der Bediener der landwirtschaftlichen Kombination stärker auf andere Aufgaben konzentrieren kann. Bei einem autonom betreibbaren landwirtschaftlichen Arbeitsfahrzeug als Teil der landwirtschaftlichen Kombination kann eine Steuerungsvorrichtung des autonom betreibbaren landwirtschaftlichen Arbeitsfahrzeuges mit der Steuereinheit des landwirtschaftlichen Bodenbearbeitungsgerätes zum Datenaustausch kommunizieren und/oder zusätzlich zur Wahrnehmung der Steuerungsaufgaben der Steuereinheit ausgeführt und eingerichtet sein.

Die vorliegende Erfindung wird nachstehend anhand eines in den Zeichnungen dargestellten Ausführungsbeispieles näher erläutert.

Es zeigen:
- Fig. 1: schematisch und exemplarisch ein Bodenbearbeitungsgerät in Seitenansicht;
- Fig. 2: schematisch und exemplarisch eine perspektivische Ansicht des Bodenbearbeitungsgerätes gemäß Fig. 1; und
- Fig. 3: schematisch und exemplarisch eine vereinfachte Darstellung des Bodenbearbeitungsgerätes mit daran angeordneten Sensoranordnungen.

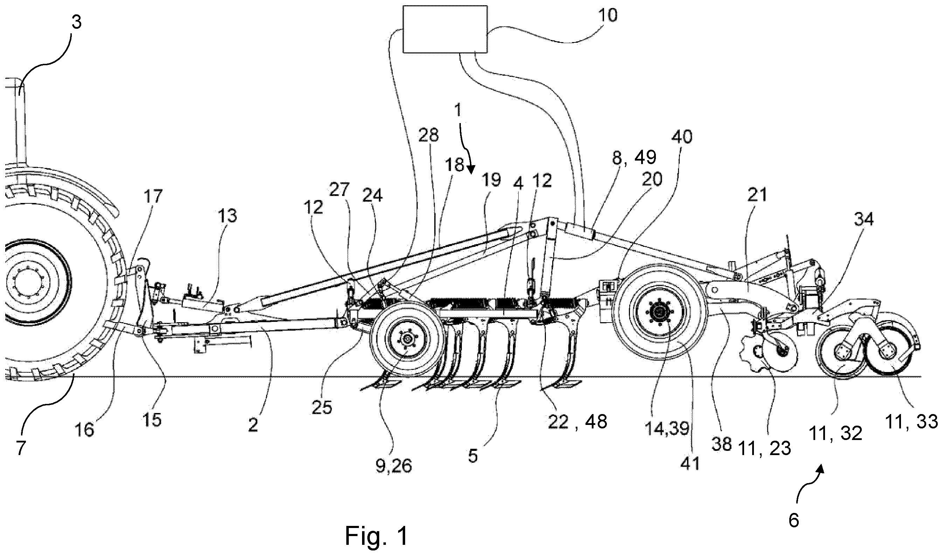

In Fig. 1 ist ein gezogenes Bodenbearbeitungsgerät 1 zur Bearbeitung eines Feldbodens 7 in Seitenansicht dargestellt. Dieses ist über eine Zugeinrichtung 2 und einen Anbaurahmen 15 mit Unter- und Oberlenkern 16, 17 eines als Dreipunkthydraulik ausgeführten Heckhubwerks eines landwirtschaftlichen Arbeitsfahrzeuges 3 verbunden. Das Arbeitsfahrzeug 3 ist im dargestellten Ausführungsbeispiel als ein Traktor ausgeführt. Das Arbeitsfahrzeug 3 kann auch als eine autonome Einheit ausgeführt sein, an welcher das Bodenbearbeitungsgerät 1 angeordnet oder angekoppelt ist.

Das Heckhubwerk kann das Bodenbearbeitungsgerät 1 im vorderen Bereich ausheben. Zudem stellt das Arbeitsfahrzeug 3 über nicht weiter dargestellte Leitungen die hydraulische oder elektrische Versorgung für das Bodenbearbeitungsgerät 1 und eine Steuereinheit 10 zur Steuerung und Regelung bereit. Die Steuereinheit 10 generiert Steuerbefehle zur Ansteuerung zumindest eines Aktuators 8 oder zumindest einer aktuierten Kinematik sowie weiterer Stellmittel 12, 13, 28, 36, 40 des Bodenbearbeitungsgerätes 1 und/oder des Arbeitsfahrzeuges 3. Die Steuerbefehle können direkt oder über nicht weiter dargestellte Schalteinheiten wie elektrische Leistungsschalter oder hydraulische oder pneumatische Ventile an den zumindest einen Aktuator 8 und die weiteren Stellmittel 12, 13, 28, 36, 40 übermittelt werden. Die Steuereinheit 10 kann mit einer nicht dargestellten Anzeige oder Bedieneinheit an dem Bodenbearbeitungsgerät 1 oder dem Arbeitsfahrzeug 3 verbunden sein. Die Anzeige und/oder Bedieneinheit kann auch Bestandteil einer entfernten Datenverarbeitungsvorrichtung sein. Hierzu kann die Steuereinheit 10 zur drahtlosen oder drahtgebundenen Kommunikation mit der entfernten Datenverarbeitungsvorrichtung eingerichtet sein.

An dem Anbaurahmen 15 ist die Zugeinrichtung 2 gelenkig in mehreren Freiheitsgraden befestigt, um Nick-, Wank- und Lenkbewegungen zwischen Arbeitsfahrzeug 3 und Bodenbearbeitungsgerät 1 auszugleichen. Oberhalb der Zugeinrichtung 2 ist das als Hydraulikzylinder ausgeführte Stellmittel 13 zwischen der Zugeinrichtung 2 und dem Anbaurahmen 15 gelenkig angeordnet, um eine Gewichtsverlagerung von dem Bodenbearbeitungsgerät 1 oder der Vorderachse auf die Hinterachse des Arbeitsfahrzeuges 3 in Funktion eines Traktionsverstärkers zu ermöglichen.

Das Bodenbearbeitungsgerät 1 weist ein vorderes Rahmensegment 4 auf. Die Zugeinrichtung 2 ist einerseits an dem vorderen Rahmensegment 4 befestigt und stützt sich über eine Strebe 18 gegen einen ebenfalls am vorderen Rahmensegment 4 befestigten Turm 20 ab, welcher wiederum über weitere Streben 19 zum vorderen Rahmensegment 4 abgestrebt ist. Am vorderen Rahmensegment 4 sind längs und quer zueinander beabstandet erste Bodenbearbeitungswerkzeuge 5, beispielsweise in Form von überlastungsgesicherten Flügelscharzinken, in Querreihen befestigt. Seitlich zum vorderen Rahmen 4 sind Tiefenführungseinrichtungen 9 höhenverstellbar befestigt. Die Tiefenführungseinrichtung 9 besteht aus einem Stützrad 26, welches drehbar an einem Schwenkarm 25 gelagert ist. Das Stützrad 26 ist vertikal verschwenkbar am vorderen Rahmensegment 4 gelagert und stützt sich über ein Spannschloss 24 gegen eine Lasche 27 ab. Anstelle des Stützrades 26 sind auch Schleifkufen oder andere Tiefenführungsmittel denkbar.

Hinter dem vorderen Rahmensegment 4 ist über Gelenke 22 ein hinteres Rahmensegment 21 vertikal schwenkbar um eine in Querrichtung des Bodenbearbeitungsgerätes 1 verlaufende Schwenkachse 48 angebracht. An dem hinteren Rahmensegment 21 sind zweite Bodenbearbeitungswerkzeuge 11 in zumindest einer Querreihe angeordnet. Das hintere Rahmensegment 21 trägt im dargestellten Ausführungsbeispiel zudem eine Rückverfestigungseinheit 6 mit weiteren Bodenbearbeitungswerkzeugen 11. Zwischen dem hinteren Rahmensegment 21 und dem Turm 20 ist der zumindest eine Aktuator 8 in Form eines verlängerten Hydraulikzylinders im Abstand zu den Gelenken 22 angebracht. Der zumindest eine Aktuator 8 bildet hier und vorzugsweise zumindest eine Schwenkvorrichtung 49, um das hintere Rahmensegment 21 um die Schwenkachse 48 gegenüber dem vorderen Rahmensegment 4 zu verschwenken. Durch Längenverstellung dieses zumindest einen Aktuators 8 respektive der zumindest einen Schwenkvorrichtung 49 schwenkt das hintere Rahmensegment 21 um die Schwenkachse 48 der Gelenke 22 und ermöglicht eine Neigungs- und Höhenverstellung des hinteren Rahmensegmentes 21 relativ zu den ersten Bodenbearbeitungswerkzeugen 5 am vorderen Rahmensegment 4.

Steigt der gemessene Auflagedruck der Tiefenführungseinrichtung 9 auf den Feldboden 7 beispielsweise während der Durchfahrt einer Bodenunebenheit, gibt die Steuereinheit 10 dem zumindest einen Aktuator 8 ein Signal, weiter auszufahren, bis der angestrebte Auflagedruck der Tiefenführungseinrichtung 9 erreicht wird. Sinkt der gemessene Auflagedruck, verhält sich die Steuereinheit 10 umgekehrt und sendet dem zumindest einen Aktuator 8 respektive der zumindest einen Schwenkvorrichtung 49 ein Signal, wieder einzufahren, bis der angestrebte Auflagedruck der Tiefenführungseinrichtung 9 auf den Boden 7 erreicht wird. Somit wird ein ständiger Kontakt und Auflagedruck der Tiefenführungseinrichtung 9 zum Boden 7 gewährleistet und somit die gewünschte Arbeitstiefe der Bodenbearbeitungswerkzeuge 5 auch bei Arbeitsfahrt in unebenem und kupiertem Gelände beibehalten. Dabei bleibt die Last auf die Rückverfestigungseinheit 6 annähernd konstant und die Zuglinie zwischen Anbaurahmen 15 und Bodenbearbeitungswerkzeuge 5 in idealer Richtung erhalten.

Der Rückverfestigungseinheit 6 vorgelagert können als zweite Bodenbearbeitungswerkzeuge 11 Einebnungswerkzeuge in Form von angewinkelten, drehbaren Hohlscheiben 23 am hinteren Rahmensegment 21 angeordnet sein. Die als Einebnungswerkzeuge ausgeführten zweiten Bodenbearbeitungswerkzeuge 11 ebnen die von der letzten Reihe von Bodenbearbeitungswerkzeugen 5 aufgeworfenen Dämme aus losem Bodenmaterial wieder ein. Zudem ist gelenkig am hintere Rahmensegment 21 ein vertikal schwenkbares Transportfahrwerk 14 angebracht, welches in üblicher Weise aus einem Fahrwerksrahmen 38, einer Laufachse 39 und Laufrädern 41 besteht und mit Stellmitteln 28 in Form von hydraulischen Zylindern das Bodenbearbeitungsgerät 1 für Transport und Wendebetrieb aufsattelt. Während der Bodenbearbeitung wird das Transportfahrwerk 14 über die Oberfläche des Bodens 7, wie dargestellt, ausgehoben.

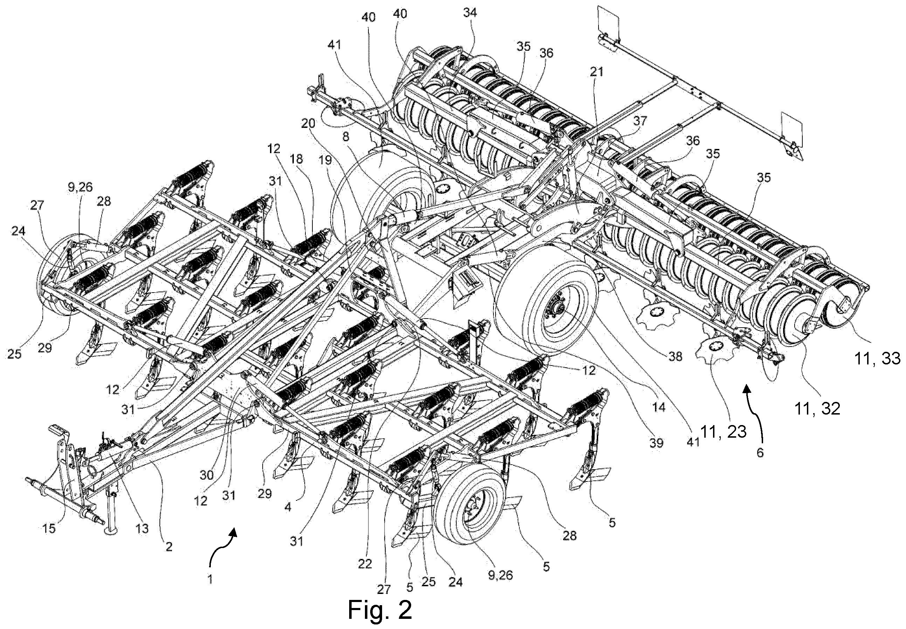

Fig. 2 zeigt das gleiche Gerät in perspektivischer Darstellung. Das vordere Rahmensegment 4 ist aus einem Mittelteil 30 und zwei damit schwenkbar verbundenen Seitenteilen 29 gebildet. Vier Stellmittel 12 klappen die Seitenteile 29 um Gelenke 31 von einer vertikalen, schmalen Transportstellung in eine horizontale, wie dargestellte Arbeitsstellung. In gleicher Weise wie das vordere Rahmensegment 4 ist die am hinteren Rahmensegment 21 angeordnete Rückverfestigungseinrichtung 6 klappbar für die Umstellung von Transport- in Arbeitsstellung ausgebildet. Die zweiten Bodenbearbeitungswerkzeuge 11 der Rückverfestigungseinrichtung 6 umfassen ein vorderes und ein hinteres Paar Walzen 32, 33, wobei sich jede Walze 32, 33 über die halbe Maschinenbreite erstreckt. Die Walzen 32, 33 sind jeweils in einem Walzenrahmen 34 drehbar gelagert. Der Walzenrahmen 34 wiederum ist pendelnd jeweils an einem Schwenkarm 35 angelenkt, welche über die Stellmittel 36 von Arbeits- in Transportposition schwenken können. Die Anordnung ist hier spiegelsymmetrisch ausgebildet. Die Stellmittel 36 und die Schwenkarme 35 sind an einem Mittelrahmen 37 gelagert, welcher dem hinteren Rahmensegment 21 zugeordnet ist. Auch eine einzelne Walzenreihe als seitliches Walzenpaar ist möglich, ebenso sind die verschiedensten Walzenformen auch als Reifenpacker denkbar, welche wiederum auch zum Straßentransport des Bodenbearbeitungsgerätes 1 dienen können. Die Rückverfestigungseinrichtung 6 verdichtet den gelockerten Boden 7 ganzflächig. Aber auch eine streifenweise Rückverfestigung ist denkbar. Die Rückverfestigungseinrichtung 6 ist in mehreren Freiheitsgraden mehrfach beweglich ausgeführt. Entscheidend für die Funktion der Regelung ist jedoch nur die vertikale Verstellbarkeit oder die Höhenverstellung der Rückverfestigungseinrichtung 6 relativ zu den Bodenbearbeitungswerkzeugen 5.

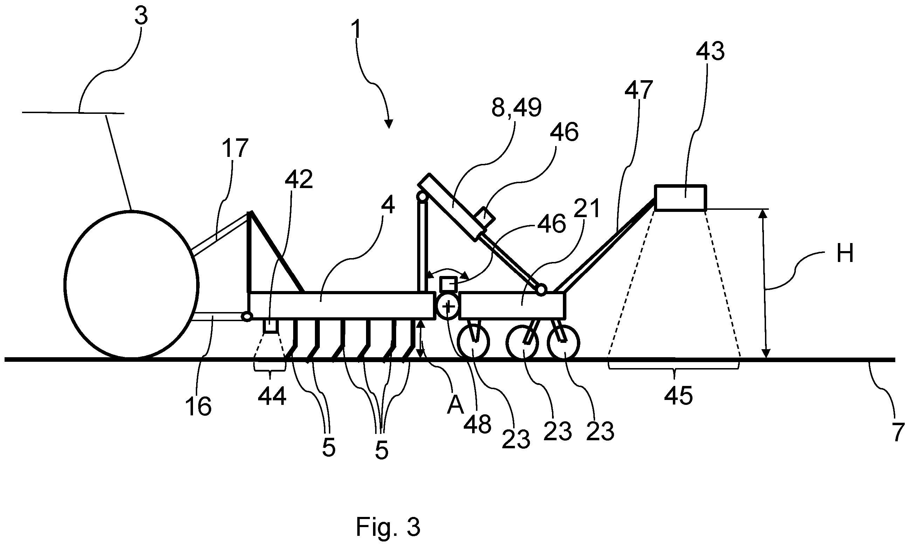

Die Darstellung in Fig. 3 zeigt schematisch und exemplarisch eine vereinfachte Darstellung des Bodenbearbeitungsgerätes 1 mit daran angeordneten ersten und zweiten Sensoranordnungen 42, 43. Die erste Sensoranordnung 42 ist den ersten Bodenbearbeitungswerkzeugen 5 vorgeordnet am vorderen Rahmensegment 4 angeordnet.

Die zumindest eine zweite Sensoranordnung 43 ist den zweiten Bodenbearbeitungswerkzeugen 11 nachgeordnet am hinteren Rahmensegment 21 angeordnet. Die Sensoranordnungen 42, 43 sind dazu ausgeführt und eingerichtet, jeweils einen parallel zu der zumindest einer Querreihe mit Bodenbearbeitungswerkzeugen 5 verlaufenden und dem Boden zugewandten linienförmigen, flächenförmigen und/oder punktwolkenförmigen Messbereich 44, 45 aufzuspannen. Im in Fig. 3 dargestellten Ausführungsbeispiel spannt die jeweilige Sensoranordnungen 42, 43 einen flächigen Messbereich 44 bzw. 45 auf.

Die Sensoranordnungen 42, 43 am vorderen und am hinteren Rahmensegment 4, 21 umfassen jeweils zumindest einen berührungslos arbeitenden Sensor. Hierzu sind die Sensoren als Ultraschall-Sensoren, Radar-Sensoren, Lidar-Sensoren oder als Kamera ausgeführt. Bevorzugt sind die Sensoranordnungen 42, 43 mit identischen Sensoren ausgeführt. Denkbar ist auch eine Kombination von Sensoranordnungen 42, 43 mit nach unterschiedlichen Messprinzipien arbeitenden Sensoren zur Anordnung an dem Bodenbearbeitungsgerät 1.

Der Schwenkachse 48 und/oder dem zumindest einen Aktuator 8 oder der aktuierten Kinematik respektive der zumindest einen Schwenkvorrichtung 49 ist zumindest eine Sensoreinheit 46 zugeordnet, die dazu ausgeführt und eingerichtet ist, eine durch eine Schwenkbewegung um die Schwenkachse 48 generierte Abweichung einer parallelen Ausrichtung des hinteren Rahmensegmentes 21 relativ zum vorderen Rahmensegment 4 mittelbar oder unmittelbar zu detektieren. Hierzu kann durch die zumindest eine Sensoreinheit 46 ein Schwenkwinkel erfasst werden. Alternativ oder zusätzlich kann ein Verstellweg des Aktuators 8 durch die zumindest eine Sensoreinheit 46 erfasst werden. Insbesondere kann die zumindest eine Sensoreinheit 46 als Inertialmesseinheit, Lagesensor, Winkelsensor und/oder Wegmesssensor ausgeführt sein.

Die am vorderen Rahmensegment 4 angeordnete erste Sensoranordnung 42 ist hier und vorzugsweise an der Unterseite des vorderen Rahmensegmentes 4 angeordnet. Wesentlich ist, dass die am vorderen Rahmensegment 4 angeordnete erste Sensoranordnung 42 derart am vorderen Rahmensegment 4 positioniert ist, dass ein vertikaler Abstand A zum Boden 7 bestimmbar ist. Die am hinteren Rahmensegment 21 angeordnete zumindest eine zweite Sensoranordnung 43 kann an einer Halterung 47 angeordnet sein, welche zumindest abschnittsweise in vertikaler und horizontaler Richtung über das hintere Rahmensegment 21 hinausragt. Während die am vorderen Rahmensegment 4 angeordnete erste Sensoranordnung 42 unmittelbar vor den ersten in einer Querreihe angeordneten Bodenbearbeitungswerkzeugen 5 angeordnet ist und den in diesem Zeitpunkt durch das Bodenbearbeitungsgerät 1 unbearbeiteten Boden 7 detektiert, erfasst die am hinteren Rahmensegment 21 angeordnete zumindest eine zweite Sensoranordnung 43 den durch die Bodenbearbeitungswerkzeuge 11 am zweiten Rahmensegment 21 bearbeiteten Boden 7. Die durch die Halterung 47 bestehende räumliche Beabstandung der am hinteren Rahmensegment 21 angeordneten zumindest einen zweiten Sensoranordnung 43 sowohl in vertikaler als auch horizontaler Richtung reduziert den Einfluss von etwaig aufgeworfenem Erdreich oder dergleichen.

Der vertikale Abstand A zwischen der Position der ersten Sensoranordnung am vorderen Rahmensegment 4 und dem Boden 7 ist durch die Positionen von Unterlenkern 16 und Oberlenker 17 des als Dreipunkthydraulik ausgeführten Heckhubwerks des landwirtschaftlichen Arbeitsfahrzeuges 3 bekannt und/oder wird mittels der ersten Sensoranordnung 42 bestimmt.

Ein vertikaler Abstand H zwischen der zumindest einen zweiten Sensoranordnung 43 am äußeren Ende der Halterung 47 und dem Boden 7 ist aufgrund der Geometrie der Halterung 47 bekannt bzw. einstellbar. Eine Einstellbarkeit des vertikalen Abstands H kann durch eine Teleskopierbarkeit und/oder Schwenkbarkeit der Halterung 47 erreicht werden.

Die von den Sensoranordnungen 42, 43 und der zumindest einen Sensoreinheit 46 generierten Messsignale werden an die Steuereinheit 10 zur Bestimmung der Orientierung des vorderen Rahmensegmentes 4 und des hinteren Rahmensegmentes 21 relativ zum Boden 7 zur Auswertung übertragen. Mittels der durch die Sensoranordnungen 42, 43 aufgespannten linienförmigen, flächenförmigen und/oder punktwolkenförmigen Messbereiche 44, 45 wird die Orientierung der Rahmensegmente 4, 21 zueinander vor und nach der Bearbeitung des Bodens 7 bestimmt. Der Messbereich 44 der ersten Sensoranordnung 42 befindet sich vor den Bodenbearbeitungswerkzeugen 5 des vorderen Rahmensegmentes 4. Der Messbereich 45 zumindest einen zweiten Sensoranordnung 43 befindet sich hinter den Bodenbearbeitungswerkzeugen 11 des hinteren Rahmensegmentes 21. Während der Bearbeitung wird über die Messbereiche 44, 45 der jeweilige vertikale Abstand A, H und die Lage der zumindest einen zweiten Sensoranordnung 43 am hinteren Rahmensegment 21 gegenüber dem Boden 7 bestimmt. Durch die am hinteren Rahmensegment 21 während der Bearbeitung unveränderbare Position der zumindest einen zweiten Sensoranordnung 43 wird ersichtlich, in welche Richtung das hintere Rahmensegment 21 in Bezug auf den zu bearbeitenden Boden 7 verschoben bzw. gedreht ist, d.h. welche Orientierung es gegenüber dem Boden 7 aufweist. Ein Verschwenken des hinteren Rahmensegmentes 21 gegenüber dem vorderen Rahmensegment 4 durch die Ansteuerung der zumindest einen Schwenkvorrichtung 49 wird durch die zumindest eine Sensoreinheit 46 detektiert. Die daraus resultierende Änderung der Lage der zumindest einen zweiten Sensoranordnung 43 am hinteren Rahmensegment 21 wird dabei bei der Auswertung der Messsignale der zumindest einen zweiten Sensoranordnung 43 durch die Steuereinheit 10 berücksichtigt.

Die Steuereinheit 10 steuert die zumindest eine Schwenkvorrichtung 49 in Abhängigkeit von der bestimmten Orientierung an, um das vordere Rahmensegment 4 und das hintere Rahmensegment 21 parallel zum Boden 7 auszurichten. Hierdurch wird während des Bearbeitungsvorgangs die Parallelität der Ausrichtung des vorderen Rahmensegmentes 4 und des hinteren Rahmensegmentes 21 kontinuierlich erfasst und erforderlichenfalls angepasst. Dies ermöglicht eine Entlastung des Bedieners des Bodenbearbeitungsgeräts 1, der sich in der Regel in der Kabine des Arbeitsfahrzeuges 3 befindet, von der manuellen Überwachung der Parallelität der Ausrichtung und der erforderlichen Anpassung durch die manuelle Ansteuerung des zumindest einen Aktuators 8 oder der aktuierten Kinematik.

Des Weiteren ermöglicht ein solches Bodenbearbeitungsgerät 1 die Verwendung an automatisiert oder autonom betreibbaren Arbeitsfahrzeugen.

Vor der Bearbeitung wird eine Kalibrierung der Sensoranordnungen 42, 43 sowie der zumindest einen Sensoreinheit 46 durchgeführt, indem eine von dem Bediener des Bodenbearbeitungsgeräts 1 vorgenommene manuelle Einstellung der parallelen Ausrichtung des vorderen Rahmensegmentes 4 und des hinteren Rahmensegmentes 21 gegenüber dem zu bearbeitenden Boden 7 sensorisch erfasst und in der Steuereinheit 10 hinterlegt wird.

Die Steuereinheit 10 kann mittels einer drahtlosen oder drahtgebundenen Kommunikation mit einer entfernten Datenverarbeitungsvorrichtung Daten austauschen, um dem Bediener des landwirtschaftlichen Bodenbearbeitungsgerätes 1 Einstellempfehlungen auf einer Anzeige der entfernten Datenverarbeitungsvorrichtung anzuzeigen. Insbesondere kann der Bediener diese Einstellempfehlungen bestätigen, so dass diese von der Steuereinheit 10 durch das Generieren von Steuerbefehlen zur Ansteuerung der zumindest einen Schwenkvorrichtung 49 umgesetzt werden. Denkbar ist auch, dass der Bediener die Einstellempfehlungen modifizieren kann.

### Bezugszeichenliste

| | | | |
|---|---|---|---|
| 1 | Bodenbearbeitungsgerät | 34 | Walzenrahmen |
| 2 | Zugeinrichtung | 35 | Schwenkarm |
| 3 | Arbeitsfahrzeug | 36 | Stellmittel |
| 4 | Vorderes Rahmensegment | 37 | Mittelrahmen |
| 5 | Bodenbearbeitungswerkzeug | 38 | Fahrwerksrahmen |
| 6 | Rückverfestigungseinheit | 39 | Laufachse |
| 7 | Boden | 40 | Stellmittel |
| 8 | Aktuator | 41 | Laufräder |
| 9 | Tiefenführungseinrichtung | 42 | Sensoranordnung |
| 10 | Steuereinheit | 43 | Sensoranordnung |
| 11 | Bodenbearbeitungswerkzeug | 44 | Messbereich |
| 12 | Stellmittel | 45 | Messbereich |
| 13 | Stellmittel | 46 | Sensoreinheit |
| 14 | Transportfahrwerk | 47 | Halterung |
| 15 | Anbaurahmen | 48 | Schwenkachse |
| 16 | Unterlenker | 49 | Schwenkvorrichtung |
| 17 | Oberlenker | A | Vertikaler Abstand von 4 |
| 18 | Strebe | H | Vertikaler Abstand von 21 |
| 19 | Strebe | | |
| 20 | Turm | | |
| 21 | Hinteres Rahmensegment | | |
| 22 | Gelenk | | |
| 23 | Hohlscheibe | | |
| 24 | Spannschloss | | |
| 25 | Schwenkarm | | |
| 26 | Stützrad | | |
| 27 | Lasche | | |
| 28 | Stellmittel | | |
| 29 | Seitenteil | | |
| 30 | Mittelteil | | |
| 31 | Gelenk | | |
| 32 | Walze | | |
| 33 | Walze | | |

## Patentansprüche

1. Landwirtschaftliches Bodenbearbeitungsgerät (1) zur Bearbeitung eines Bodens (7), umfassend einen Tragrahmen mit einem vorderen Rahmensegment (4), an welchem erste Bodenbearbeitungswerkzeuge (5) angeordnet sind, und ein hinteres Rahmensegment (21), welches am vorderen Rahmensegment (4) um eine in Querrichtung des Bodenbearbeitungsgerätes (1) verlaufende Schwenkachse (48) schwenkbar angelenkt ist, wobei an dem hinteren Rahmensegment (21) zweite Bodenbearbeitungswerkzeuge (11) angeordnet sind, und wobei das hintere Rahmensegment (21) durch zumindest eine Schwenkvorrichtung (49) relativ zum vorderen Rahmensegment (4) schwenkbar ist, wobei dem Bodenbearbeitungsgerät (1) eine Steuereinheit (10) zugeordnet ist, welche die zumindest eine Schwenkvorrichtung (49) ansteuert, **dadurch gekennzeichnet, dass** eine erste Sensoranordnung (42) den ersten Bodenbearbeitungswerkzeugen (5) vorgeordnet am vorderen Rahmensegment (4) angeordnet ist und mindestens eine zweite Sensoranordnung (43) den zweiten Bodenbearbeitungswerkzeugen (11) nachgeordnet am hinteren Rahmensegment (21) angeordnet ist, wobei die Sensoranordnungen (42, 43) dazu ausgeführt und eingerichtet sind, jeweils einen parallel zur Schwenkachse (48) verlaufenden und dem Boden (7) zugewandten Messbereich (44, 45) aufzuspannen und die von den Sensoranordnungen (42, 43) generierten Messsignale an die Steuereinheit (10) zur Bestimmung der Orientierung des vorderen und des hinteren Rahmensegmentes (4, 21) relativ zum Boden (7) zu übertragen, wobei die Steuereinheit (10) die zumindest eine Schwenkvorrichtung (49) in Abhängigkeit von der bestimmten Orientierung ansteuert, um das vordere Rahmensegment (4) und das hintere Rahmensegment (21) parallel zum Boden (7) auszurichten.

2. Bodenbearbeitungsgerät (1) nach Anspruch 1, **dadurch gekennzeichnet, dass** die erste und zweite Sensoranordnung (42, 43) am vorderen und am hinteren Rahmensegment (4, 21) jeweils zumindest einen taktilen und/oder berührungslos arbeitenden Sensor umfassen.

3. Bodenbearbeitungsgerät (1) nach Anspruch 2, **dadurch gekennzeichnet, dass** der zumindest eine berührungslos arbeitende Sensor der ersten und zweiten Sensoranordnung (42, 43) als Ultraschall-Sensoren, Radar-Sensoren, Lidar-Sensoren und/oder als Kamera ausgeführt ist.

4. Bodenbearbeitungsgerät (1) nach einem der Ansprüche 1 bis 3, **dadurch gekennzeichnet, dass** die von der ersten und zweiten Sensoranordnung (42, 43) aufgespannten Messbereiche (44, 45) linienförmig, flächenförmig und/oder punktwolkenförmig ausgebildet sind.

5. Bodenbearbeitungsgerät (1) nach einem der vorangehenden Ansprüche, **dadurch gekennzeichnet, dass** der Schwenkachse (48) und/oder der zumindest einen Schwenkvorrichtung (49) zumindest eine Sensoreinheit (46) zugeordnet ist, die dazu ausgeführt und eingerichtet ist, eine durch eine Schwenkbewegung um die Schwenkachse (48) generierte Abweichung einer parallelen Ausrichtung des hinteren Rahmensegmentes (21) relativ zum vorderen Rahmensegment (4) zu detektieren.

6. Bodenbearbeitungsgerät (1) nach Anspruch 5, **dadurch gekennzeichnet, dass** die zumindest eine Sensoreinheit (46) als Inertialmesseinheit, Lagesensor, Winkelsensor und/oder Wegmesssensor ausgeführt ist.

7. Bodenbearbeitungsgerät (1) nach Anspruch 5 oder 6, **dadurch gekennzeichnet, dass** die Steuereinheit (10) Signale der zumindest einen Sensoreinheit (46) auswertet und bei der Ansteuerung der zumindest einen Schwenkvorrichtung (49) berücksichtigt.

8. Bodenbearbeitungsgerät (1) nach einem der vorangehenden Ansprüche, **dadurch gekennzeichnet, dass** die am vorderen Rahmensegment (4) angeordnete erste Sensoranordnung (42) derart am vorderen Rahmensegment (4) positioniert ist, dass ein Abstand zum Boden bestimmbar ist, und dass die am hinteren Rahmensegment (21) angeordnete zumindest eine zweite Sensoranordnung (43) an einer Halterung (47) angeordnet ist, welche zumindest abschnittsweise in vertikaler und horizontaler Richtung über das hintere Rahmensegment (21) hinausragt.

9. Bodenbearbeitungsgerät (1) nach einem der vorangehenden Ansprüche, **dadurch gekennzeichnet, dass** die ersten Bodenbearbeitungswerkzeuge (5) am vorderen Rahmensegment (4) dazu ausgeführt und eingerichtet sind, abschnittsweise in den Boden (7) einzudringen und die zweiten Bodenbearbeitungswerkzeuge (11) am hinteren Rahmensegment (21) zur Einebnung des Bodens (7) eingerichtet sind.

10. Bodenbearbeitungsgerät (1) nach einem der vorangehenden Ansprüche, **dadurch gekennzeichnet, dass** die ersten Bodenbearbeitungswerkzeuge (5) am vorderen Rahmensegment (4) von den zweiten Bodenbearbeitungswerkzeugen (11) am hinteren Rahmensegment (21) abweichend ausgeführt und zur Durchführung unterschiedlicher Bodenbearbeitungsaufgaben eingerichtet sind.

11. Bodenbearbeitungsgerät (1) nach einem der vorangehenden Ansprüche, **dadurch gekennzeichnet, dass** die Steuereinheit (10) zur drahtlosen oder drahtgebundenen Kommunikation mit einer entfernten Datenverarbeitungsvorrichtung eingerichtet ist.

12. Verfahren zum Betreiben eines landwirtschaftlichen Bodenbearbeitungsgerätes (1) zur Bearbeitung eines Bodens (7), umfassend einen Tragrahmen mit einem vorderen Rahmensegment (4), an welchem erste Bodenbearbeitungswerkzeuge (5) angeordnet sind, und einem hinteren Rahmensegment (21), welches am vorderen Rahmensegment (4) um eine in Querrichtung des Bodenbearbeitungsgerätes (1) verlaufende Schwenkachse (48) schwenkbar angelenkt ist, wobei an dem hinteren Rahmensegment (21) zweite Bodenbearbeitungswerkzeuge (11) angeordnet sind, und wobei das hintere Rahmensegment (21) durch zumindest eine Schwenkvorrichtung (49) relativ zum vorderen Rahmensegment (4) geschwenkt wird, und wobei dem Bodenbearbeitungsgerät (1) eine Steuereinheit (10) zugeordnet ist, durch welche die zumindest eine Schwenkvorrichtung (49) angesteuert wird, **dadurch gekennzeichnet, dass** eine erste Sensoranordnung (42) den ersten Bodenbearbeitungswerkzeugen (5) vorgeordnet am vorderen Rahmensegment (4) angeordnet ist und mindestens eine zweite Sensoranordnung (43) den zweiten Bodenbearbeitungswerkzeugen (11) nachgeordnet am hinteren Rahmensegment (21) angeordnet ist, wobei durch die Sensoranordnungen (42, 43) jeweils ein parallel zu der Schwenkachse (48) verlaufender und dem Boden (7) zugewandten Messbereich (44, 45) aufgespannt wird und die von den Sensoranordnungen (42, 43) generierten Messsignale an die Steuereinheit (10) zur Auswertung der Orientierung des vorderen und des hinteren Rahmensegmentes (4, 21) relativ zum Boden (7) übertragen werden, wobei die zumindest eine Schwenkvorrichtung (49) in Abhängigkeit von der bestimmten Orientierung durch die Steuereinheit (10) angesteuert wird, um das vordere Rahmensegment (4) und das hintere Rahmensegment (21) parallel zum Boden (7) auszurichten.

13. Verfahren nach Anspruch 12, **dadurch gekennzeichnet, dass** die zumindest eine Schwenkvorrichtung (49) durch die Steuereinheit (10) in Abhängigkeit von der bestimmten Orientierung des vorderen und des hinteren Rahmensegmentes (4, 21) relativ zum Boden (7) automatisch angesteuert wird.

14. Verfahren nach Anspruch 11 oder 12, **dadurch gekennzeichnet, dass** durch die Steuereinheit (10) in Abhängigkeit von der bestimmten Orientierung des vorderen und des hinteren Rahmensegmentes (4, 21) relativ zum Boden (7) eine Einstellempfehlung zur manuellen Ansteuerung der zumindest einen Schwenkvorrichtung (49) generiert wird.

15. Landwirtschaftliche Kombination, welche ein landwirtschaftliches Arbeitsfahrzeug (3) und ein Bodenbearbeitungsgerät (1) umfasst, wobei das Bodenbearbeitungsgerät (1) nach einem der Ansprüche 1 bis 11 ausgeführt und zur Durchführung des Verfahrens nach einem der Ansprüche 12 bis 14 eingerichtet ist.

16. Landwirtschaftliche Kombination nach Anspruch 15, **dadurch gekennzeichnet, dass** das landwirtschaftliche Arbeitsfahrzeug (3) vollautomatisiert oder autonom betreibbar ist.
